# EUROPÄISCHE PATENTSCHRIFT

(11) **EP 2 525 107 B1**
(45) Veröffentlichungstag und Bekanntmachung des Hinweises auf die Patenterteilung: **07.08.2019**
(21) Anmeldenummer: 12168531.7
(22) Anmeldetag: 18.05.2012
(51) Int. Cl.: F16B 13/00, E04G 5/04

(54) **Gerüstverankerungsvorrichtung**
SCAFFOLDING ANCHORING DEVICE
DISPOSITIF D'ANCRAGE D'ÉCHAFAUDAGE

(30) Priorität: 18.05.2011 DE 202011100848 U
(43) Veröffentlichungstag der Anmeldung: 21.11.2012
(73) Patentinhaber: Henning GmbH & Co. KG, 59505 Bad Sassendorf - Lohne (DE)
(72) Erfinder: Henning, Wolfgang, 59505 Bad Sassendorf (DE)
(74) Vertreter: Manske, Jörg

(56) Entgegenhaltungen:
- WO-A1-2009/079697
- DE-A1- 2 908 405
- DE-A1- 19 947 913
- DE-U- 7 415 869
- DE-U1-202009 004 831
- GB-A- 2 449 360

## Beschreibung

Die vorliegende Erfindung betrifft eine Gerüstverankerungsvorrichtung zum Verankern eines Teils eines Gerüsts an einem Bauwerk nach dem Oberbegriff des Anspruchs 1.

Gerüstverankerungsvorrichtungen der eingangs genannten Art sind aus dem Stand der Technik in unterschiedlichen Ausführungsformen bekannt. Sie können zum Beispiel als einfache Ösenschrauben ausgeführt sein, die insbesondere einen nach Art eines Holzgewindes ausgebildeten Gewindeabschnitt aufweisen, welcher bei der Montage in einen damit korrespondierenden, bauwerksseitig angeordneten Dübel eingeschraubt werden kann. An einem dem Gewindeabschnitt gegenüberliegenden Ende ist eine Ringöse ausgebildet, in die ein Gerüsthaken einsetzt werden kann, um einen Teil eines Gerüsts an dem Bauwerk sichern zu können. Derartige Ösenschrauben sind dazu in der Lage, sowohl Zug- als auch Druckkräfte zuverlässig aufzunehmen. Problematischer können in diesem Zusammenhang quer zur Längsachse der Ösenschraube wirkende Kräfte (kurz: Querkräfte oder Querlasten) sein, die so stark sein können, dass sie im ungünstigsten Fall zu einer irreversiblen plastischen Verformung der Ösenschraube führen können und diese unbrauchbar machen. Dieses Problem besteht insbesondere bei Ösenschrauben mit einem relativ langen Schaft, wie sie zur Verankerung eines Gerüsts an einer Fassade eines Bauwerks, die mit einer Dämmschicht versehen ist beziehungsweise versehen werden soll, verwendet werden.

Das deutsche Gebrauchsmuster DE 20 2009 004 831 U1 offenbart eine Gerüstverankerungsvorrichtung, die sich für eine Anbringung an einer Fassade mit einer Dämmschicht eignet. Die Gerüstverankerungsvorrichtung weist an einem fassadenseitigen Ende ein Lastverteilungsteil auf, das mit einem Schaft verbunden ist, an dem ein Anschlussmittel, wie zum Beispiel eine Ösenschraube, angebracht ist. Der Schaft und das Lastverteilungsteil sowie das Anschlussmittel sind aus Metall hergestellt, so dass die Gerüstverankerungsvorrichtung eine hohe Stabilität aufweist. Nach dem Gebrauch werden der Schaft sowie das Anschlussmittel von dem Lastverteilungsteil gelöst. Das in der Fassade nach dem Entfernen verbleibende Loch wird geeignet verfüllt oder beigearbeitet. Diese Gerüstverankerungsvorrichtung ist relativ aufwändig und damit teuer in der Herstellung. Zudem verbleibt das Lastverteilungsteil aus Metall nach dem Gebrauch an der Wand des Bauwerks. Dadurch können sich Wärmebrücken bilden, die unter Umständen die Eigenschaften der Fassadendämmung negativ beeinflussen können. Dabei muss in einer Ausführungsvariante ein Gewindeschaft mittels einer Kontermutter aufwändig an dem Lastverteilungsteller montiert werden.

DE 20 2009 004 831 U1 offenbart die Merkmale des Oberbegriffs des Anspruchs 1.

Die DE 29 08 405 offenbart eine Gerüstverankerungsvorrichtung mit einem Grundkörper, der eine axiale Bohrung zur Aufnahme einer Gewindestange umfasst, die in einen Mauerdübel aufgenommen werden kann. Eine Gewindebuchse ragt über das Ende der Gewindestange hinaus, so dass eine Ringschraube, an der ein Teil eines Gerüsts anbringbar ist, in die Gewindebuchse hineingeschraubt werden kann. Der Zentralkörper weist vier radial im rechten Winkel zueinander ausgehende Auflagerfüße auf, die zwischen eine Kreuzfuge von vier aneinanderstoßenden Fassadenplatten hindurchgeführt werden können. Der Grundkörper und die Auflagerfüße können zum Beispiel als einstückiges (metallisches) Gussteil ausgebildet sein, so dass sich die Gerüstverankerungsvorrichtung ebenfalls nicht für einen dauerhaften Verbleib in einer wärmegedämmten Fassade eignet.

Die DE 199 47 913 A1 offenbart eine Gerüstverankerungsvorrichtung mit einem Grundkörper, der als längliches, hohlzylindrisches Isolierelement aus einem glasfaserverstärkten Kunststoff ausgebildet ist. Diese Gerüstverankerungsvorrichtung ist zwar für eine Verwendung in wärmegedämmten Fassaden grundsätzlich geeignet. Auf Grund der Zylinderform des Grundkörpers können sich allerdings Probleme bei der Aufnahme von Querlasten ergeben. Bei zu großen Querlasten besteht die Gefahr, dass die Gerüstverankerungsvorrichtung aus ihrer Verankerung in der Gebäudewand gerissen wird.

Der vorliegenden Erfindung liegt die Aufgabe zu Grunde, eine Gerüstverankerungsvorrichtung der eingangs genannten Art zur Verfügung zu stellen, die kostengünstig herstellbar und einfach montierbar ist und darüber hinaus eine hohe Stabilität aufweist und insbesondere für die Verwendung an wärmegedämmten Gebäudefassaden geeignet sind.

Diese Aufgabe wird durch eine Gerüstverankerungsvorrichtung mit den Merkmalen des Anspruchs 1 gelöst. Die Unteransprüche betreffen vorteilhafte Weiterbildungen der Erfindung.

Eine erfindungsgemäße Gerüstverankerungsvorrichtung zeichnet sich dadurch aus, dass der Grundkörper aus einem Kunststoff, insbesondere aus einem verstärkten Kunststoff, hergestellt ist und dass das Gewindeelement abschnittsweise in den Grundkörper eingespritzt ist. Die erfindungsgemäße Gerüstverankerungsvorrichtung ermöglicht eine wirksame Aufnahme von Druck-, Zug- und Querlasten unter Einhaltung statischer Vorgaben seitens der Gerüsthersteller und ist insbesondere auch für wärmegedämmte, mit einer Dämmschicht versehene Fassaden geeignet, da der Grundkörper aus Kunststoff hergestellt ist. Dadurch können in vorteilhafter Weise teure und darüber hinaus aufwändig zu montierende Sonderkonstruktionen, insbesondere in Form zusätzlicher Abstützungen, vorgesetzter Türme oder dergleichen, mittels derer die vorstehend genannten Lasten abgefangen werden könnten, vermieden werden. Der sich von der ersten Grenzfläche zur zweiten Grenzfläche verjüngende Grundkörper aus Kunststoff bildet einen Lastverteiler, um die nach dem Eingerüsten des Bauwerks auftretenden Lasten verteilen zu können. Dadurch, dass der Grundkörper der Gerüstverankerungsvorrichtung ein einstückiges Kunststoffteil ist, kann er besonders einfach und kostengünstig hergestellt werden. Vorzugsweise kommt zur Herstellung des Grundkörpers ein verstärkter, insbesondere glasfaserverstärkter, Kunststoff zum Einsatz, um dem Grundkörper eine besonders hohe Stabilität zur Verfügung zu stellen. Da durch die Ausführung des Grundkörpers aus Kunststoff keine Wärmebrücken gebildet werden, ist dieser für einen dauerhaften Verbleib an der Fassade des Bauwerks beziehungsweise in einem Wärmeverbundsystem geeignet und bildet keine unerwünschten Wärmebrücken, die unter Umständen die Dämmeigenschaften der wärmegedämmten Fassade negativ beeinflussen können. Weiterhin ist erfindungsgemäß vorgesehen, dass das Gewindeelement abschnittsweise in den Grundkörper eingespritzt ist. Dadurch kann ein sicherer Halt des Gewindeelements in dem Grundkörper erreicht werden.

In einer besonders bevorzugten Ausführungsform wird vorgeschlagen, dass der Grundkörper rotationssymmetrisch in Bezug auf seine Längsachse ausgebildet ist. Dadurch kann in vorteilhafter Weise eine homogene Lastverteilung während des Gebrauchs der Gerüstverankerungsvorrichtung erhalten werden. Der Grundkörper kann vorteilhaft insbesondere kegelstumpfartig ausgebildet sein. Durch die Gestaltung des Grundkörpers als kegelstumpfartiger Vollmaterialkörper, wie sie gemäß einer besonders vorteilhaften Ausführungsform vorgesehen ist, können auch große Lasten wirksam abgefangen und verteilt werden.

In einer alternativen Ausführungsform besteht die Möglichkeit, dass der Grundkörper in Umfangsrichtung eine Anzahl von Verstärkungsrippen aufweist, die sich in Bezug auf einen mittleren, die Längsachse definierenden Abschnitt des Grundkörpers in radialer Richtung (nach außen) erstrecken. Die Verstärkungsrippen können dabei vorteilhaft in Umfangsrichtung des Grundkörpers gleichmäßig verteilt angeordnet sein. Unter dem Begriff "gleichmäßig verteilt" (oder auch "gleichmäßig winkelverteilt") soll in diesem Zusammenhang verstanden werden, dass die Winkel zwischen benachbarten Verstärkungsrippen - in Umfangsrichtung betrachtet - gleich sind. Es ist zum Beispiel vorteilhaft, einen Grundkörper mit acht Verstärkungsrippen zu verwenden, wobei benachbarte Verstärkungsrippen einen Winkel von 45° miteinander einschließen. Der Grundkörper kann gemäß einer bevorzugten Ausführungsform eine Basis aufweisen, die die erste Grenzfläche umfasst. Um insbesondere in axialer Richtung wirkende Lasten zuverlässig aufnehmen zu können, ist in einer besonders bevorzugten Ausführungsform vorgesehen, dass die Verstärkungsrippen orthogonal zu der Basis orientiert sind. Die Basis kann insbesondere im Wesentlichen scheibenförmig ausgebildet sein. Dann weist die Basis einen kreisförmigen Umriss auf, der ebenfalls für eine gleichmäßige Lastverteilung vorteilhaft ist.

Um gegebenenfalls vorhandene Unebenheiten im Wandverputz ausgleichen zu können, wird in einer bevorzugten Ausführungsform vorgeschlagen, dass die erste Grenzfläche eine Anzahl von dieser hervorstehender, vorzugsweise rippenartig ausgebildeter Ausgleichsvorsprünge umfasst.

Um die Montage der Gerüstverankerungsvorrichtung einfach zu gestalten, ist vorgesehen, dass das erste Anschlussmittel ein Gewindeelement mit einem Gewindeabschnitt umfasst, der in ein bauwerksseitig vorgesehenes Aufnahmemittel, insbesondere einen Dübel oder dergleichen, einschraubbar ist. Der Gewindeabschnitt kann vorteilhaft als Linksgewinde, insbesondere nach Art eines Holzgewindes oder als metrisches Gewinde ausgebildet sein.

In einer bevorzugten Ausführungsform wird vorgeschlagen, dass das zweite Anschlussmittel als Ösenschraube ausgebildet ist, deren Gewindeabschnitt in eine sich zumindest abschnittsweise in das Innere des Grundkörpers erstreckende Aufnahmeöffnung eingeschraubt oder einschraubbar ist und die eine Ringöse umfasst, in die ein hakenförmiges Befestigungsmittel für das Gerüst, insbesondere ein Gerüsthaken, einsetzbar ist. Vorteilhaft kann der Gewindeabschnitt der Ösenschraube nach Art eines Holzgewindes ausgebildet sein.

Es besteht in einer vorteilhaften Ausführungsform die Möglichkeit, dass der Gewindeabschnitt der Ösenschraube und der Gewindeabschnitt des Gewindeelements unterschiedliche Drehrichtungen aufweisen. So kann vorzugsweise der Gewindeabschnitt des Gewindeelements ein Linksgewinde sein, wohingegen der Gewindeabschnitt der Ösenschraube ein Rechtsgewinde umfasst. Dadurch kann in vorteilhafter Weise das Lösen der Gerüstverankerungsvorrichtung aus der Fassade beim Herausdrehen der Ösenschraube verhindert werden.

In einer weiteren vorteilhaften Ausführungsform besteht die Möglichkeit, dass die Aufnahmeöffnung als Durchgangsöffnung ausgebildet ist, die sich über die gesamte Länge des Grundkörpers zwischen den beiden Grenzflächen erstreckt und in der das Gewindeelement und die Ösenschraube aufgenommen sind.

In einer bevorzugten Ausführungsform besteht die Möglichkeit, dass an der zweiten Grenzfläche ein Außensechskant mit einer Bohrung angeordnet ist, die mit der Aufnahmeöffnung des Grundkörpers fluchtet.

Um die Montage der Gerüstverankerungsvorrichtung zu vereinfachen, wird in einer besonders bevorzugten Ausführungsform vorgeschlagen, dass der Grundkörper eine vorzugsweise zylindrisch geformte Durchgangsöffnung aufweist, die sich orthogonal zur Längsachse des Grundkörpers durch diesen hindurch erstreckt und in die bei der Montage ein Montagehilfswerkzeug einsetzbar ist. In diese Durchgangsöffnung kann ein zumindest abschnittweise zylindrisch ausgebildetes Montagehilfswerkzeug (zum Beispiel ein Schraubendreher oder dergleichen) eingesetzt werden, welches einen Hebel bilden kann, so dass die Montage der Gerüstverankerungsvorrichtung vereinfacht werden kann. Mittels des in die Durchgangsöffnung eingesetzten Montagehilfswerkzeugs kann ein Nutzer auf einfache Weise ein Drehmoment ausüben, indem er eine Kraft über das Montagehilfswerkzeug senkrecht zur Längsachse des Grundkörpers wirken lässt, um so den Gewindeabschnitt in den wandseitig vorgesehenen Dübel einzuschrauben.

Eine weitere besonders vorteilhafte Weiterbildung zeichnet sich durch ein Verschlussmittel aus, das so ausgebildet ist, dass es in die Aufnahmeöffnung an der zweiten Grenzfläche des Grundkörpers lösbar einsetzbar ist zum selektiven Verschließen und Freigeben der Aufnahmeöffnung. Das Verschlussmittel kann zum Beispiel einen Gewindeabschnitt und einen Kopfabschnitt aufweisen, wobei der Außendurchmesser des Kopfabschnitts größer gewählt ist als der Außendurchmesser der Aufnahmeöffnung des Grundkörpers. Das Verschlussmittel kann vorzugsweise aus einem gegenüber dem Einfluss ultravioletter Strahlung (UV-Strahlung) beständigen Kunststoff hergestellt sein, so dass es problemlos auch über längere Zeiträume der natürlichen Sonnenstrahlung ausgesetzt werden kann. Das Verschlussmittel kann auf einfache Weise in die Aufnahmeöffnung des Grundkörpers eingeschraubt werden, wenn die Gerüstverankerungsvorrichtung nicht mehr benötigt wird, aber dennoch an der Fassade verbleibt. Wenn das Gebäude erneut eingerüstet werden soll, müssen lediglich die Verschlussmittel wieder aus den Aufnahmeöffnungen der Grundkörper der Gerüstverankerungsvorrichtungen entfernt werden. Die Gerüstverankerungsvorrichtungen stehen dann wieder für den bestimmungsgemäßen Gebrauch zur Verfügung.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: einen Längsschnitt durch eine Gerüstverankerungsvorrichtung, die gemäß einem ersten Ausführungsbeispiel, welches nicht Gegenstand der vorliegenden Erfindung ist, ausgeführt ist;
- Fig. 2: eine Draufsicht auf die Gerüstverankerungsvorrichtung gemäß Fig. 1;
- Fig. 3: eine Unteransicht der Gerüstverankerungsvorrichtung gemäß Fig. 1;
- Fig. 4: einen Längsschnitt durch eine Gerüstverankerungsvorrichtung, die gemäß einem zweiten Ausführungsbeispiel, welches nicht Gegenstand der vorliegenden Erfindung ist, ausgeführt ist;
- Fig. 5: eine Draufsicht auf die Gerüstverankerungsvorrichtung gemäß Fig. 4;
- Fig. 6: eine Unteransicht der Gerüstverankerungsvorrichtung gemäß Fig. 4;
- Fig. 7: eine Seitenansicht eines Teils eines Gerüsts, welcher mittels einer Gerüstverankerungsvorrichtung an einer Fassadenwand eines Bauwerks angebracht ist;
- Fig. 8: eine Einzelheit gemäß Fig. 7;
- Fig. 9: eine perspektivische Ansicht einer Gerüstverankerungsvorrichtung, die gemäß einem bevorzugten Ausführungsbeispiel der vorliegenden Erfindung ausgeführt ist;
- Fig. 10: eine Draufsicht auf die Gerüstverankerungsvorrichtung gemäß Fig. 9;
- Fig. 11: einen Längsschnitt durch die Gerüstverankerungsvorrichtung gemäß Fig. 9;
- Fig. 12: einen weiteren Längsschnitt durch die Gerüstverankerungsvorrichtung gemäß Fig. 9;
- Fig. 13: eine Seitenansicht eines Verschlusselements zum Verschließen einer Aufnahmeöffnung des Grundkörpers.

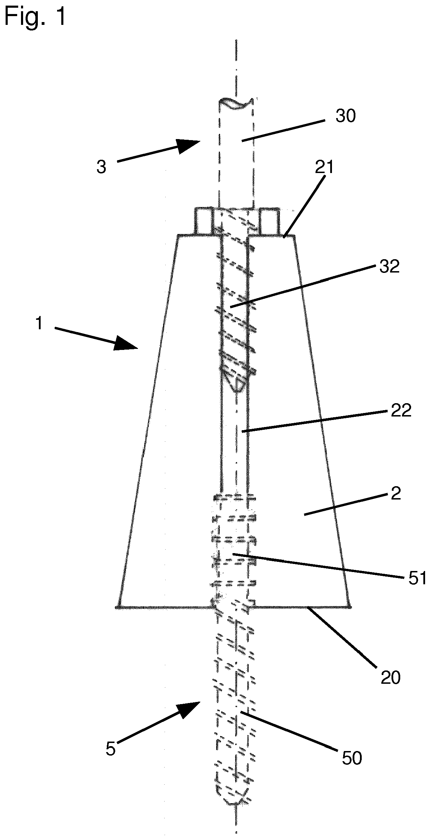

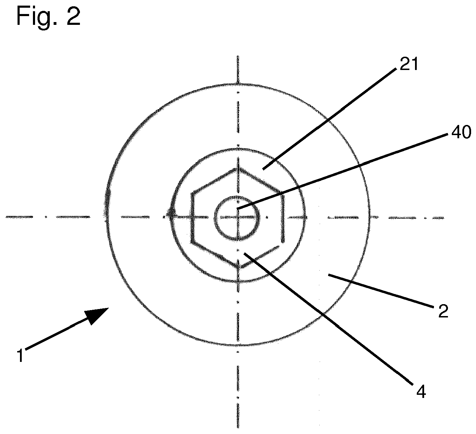

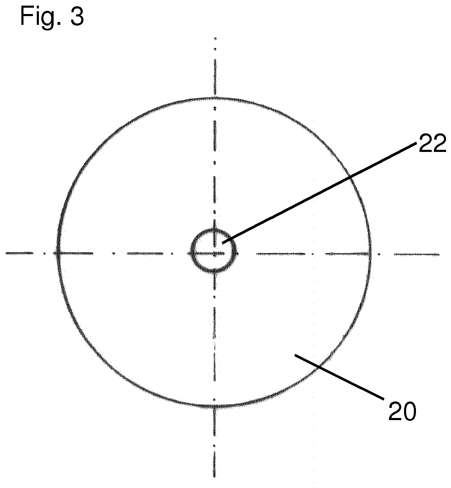

Unter Bezugnahme auf Fig. 1 bis 3 umfasst eine Gerüstverankerungsvorrichtung 1, die gemäß einem ersten Ausführungsbeispiel, welches nicht Gegenstand der vorliegenden Erfindung ist, ausgeführt ist, einen sich von einer ersten Grenzfläche 20 zu einer zweiten Grenzfläche 21 verjüngenden, um seine Längsachse rotationssymmetrischen und vorliegend im Wesentlichen kegelstumpfartig geformten Grundkörper 2, der über seine gesamte Länge eine zylindrische Aufnahmeöffnung 22 aufweist, die eine sich zwischen der ersten und zweiten Grenzfläche 20, 21 erstreckende Durchgangsöffnung bildet. Die erste Grenzfläche 20 bildet im Gebrauch der Gerüstverankerungsvorrichtung 1 eine Anlagefläche mit einer Wand 6 eines Bauwerks. Der kegelstumpfartige Grundkörper 2 ist vorliegend als einstückiger Vollmaterialkörper ausgebildet und besteht vorzugsweise aus einem - optional zusätzlich verstärkten, insbesondere glasfaserverstärkten - Kunststoffmaterial, so dass er auf einfache und kostengünstige Weise hergestellt werden kann.

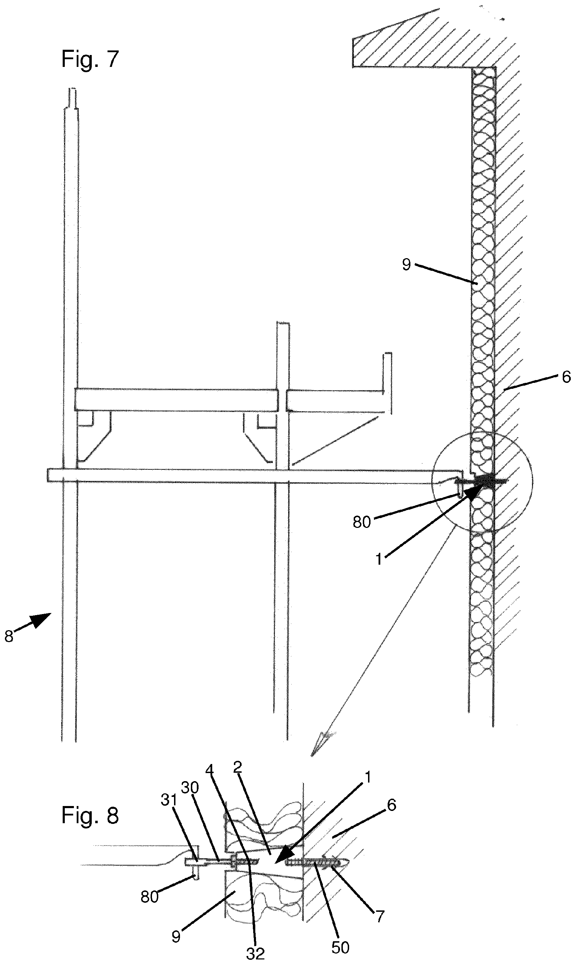

An der zweiten Grenzfläche 21 des Grundkörpers 2 ist in diesem Ausführungsbeispiel ein Außensechskant 4 mit einer zentralen Bohrung 40 angeordnet, in die eine ein Anschlussmittel für das Gerüst 8 bildende Ösenschraube 3 eingesetzt ist, die sich abschnittsweise durch die mit der Bohrung 40 fluchtende Aufnahmeöffnung 22 in das Innere des Grundkörpers 2 hinein erstreckt. Wie unter weiterer Bezugnahme auf Fig. 7 und 8 zu erkennen, in der die Gerüstverankerungsvorrichtung 1 im Gebrauch nach der Montage an einer Wand 6 eines Bauwerks dargestellt ist, weist die Ösenschraube 3 einen gewindelosen Schaftabschnitt 30 mit einer Ringöse 31 sowie einen der Ringöse 31 gegenüberliegenden Gewindeabschnitt 32 auf, mittels dessen die Ösenschraube 3 im Inneren des Grundkörpers 2 in der Aufnahmeöffnung 22 festgelegt werden kann. Vorzugsweise kann der Gewindeabschnitt 32 der Ösenschraube 3 nach Art eines Holzgewindes ausgeführt sein.

Zur Montage an der Wand 6 eines Bauwerks weist die Gerüstverankerungsvorrichtung 1 im Bereich der ersten Grenzfläche 20 ein Gewindeelement 5 mit einem Gewindeabschnitt 50 und einem Halteabschnitt 51 auf, der eine von dem Gewindeabschnitt 50 abweichende Gestaltung aufweist und dafür sorgt, dass das Gewindeelement 5 im Inneren des Grundkörpers 2 in der zylindrischen Aufnahmeöffnung 22 festgelegt werden kann. Der Gewindeabschnitt 50 des Gewindeelements 5 ist in dem hier gezeigten Ausführungsbeispiel nach Art eines Holzgewindes ausgeführt, so dass der Grundkörper 2 bei der Montage mittels des Gewindeabschnitts 50, der in einen in die Wand 6 des Bauwerks eingebrachten Dübel 7 oder dergleichen eingreifen kann, befestigt werden kann. Wie in Fig. 7 und 8 zu erkennen, wird bei dem Aufbau des Gerüsts 8 ein an einem Teil desselben ausgebildeter Gerüsthaken 80 (oder ein anderes, vorzugsweise hakenförmiges Befestigungsmittel) in die Ringöse 31 der Ösenschraube 3 eingesetzt, um diesen Teil des Gerüsts 8 mittels der Gerüstverankerungsvorrichtung 1 zu sichern.

Durch die sich von der (die Anlagefläche mit der Gebäudewand 6 bildenden) ersten Grenzfläche 20 zur zweiten Grenzfläche 21 verjüngende Form des Grundkörpers 2 können die nach der Montage des Gerüsts 8 auftretenden Lasten gleichmäßig verteilt und wirksam abgefangen werden. Mittels der ersten Grenzfläche 20 können insbesondere Querlasten, die quer zur Längsachse der Gerüstverankerungsvorrichtung 1 wirken, wirksam abgefangen und verteilt werden. Eine Mehrzahl derartiger Gerüstverankerungsvorrichtungen 1 zur Verankerung des Gerüsts 8 ermöglichen eine Ableitung von Druck-, Zug- und Querlasten unter Einhaltung statischer Vorgaben seitens der Gerüsthersteller, ohne dass teure und darüber hinaus aufwändig zu montierende Sonderkonstruktionen, insbesondere in Form zusätzlicher Abstützungen, vorgesetzter Türme oder dergleichen, erforderlich sind. Eine Mehrzahl entsprechender Gerüstverankerungsvorrichtungen 1 dient somit dazu, mehrere Teile des Gerüsts 8 und damit im Ergebnis das gesamte Gerüst 8 an der Wand 6 des Bauwerks zu sichern.

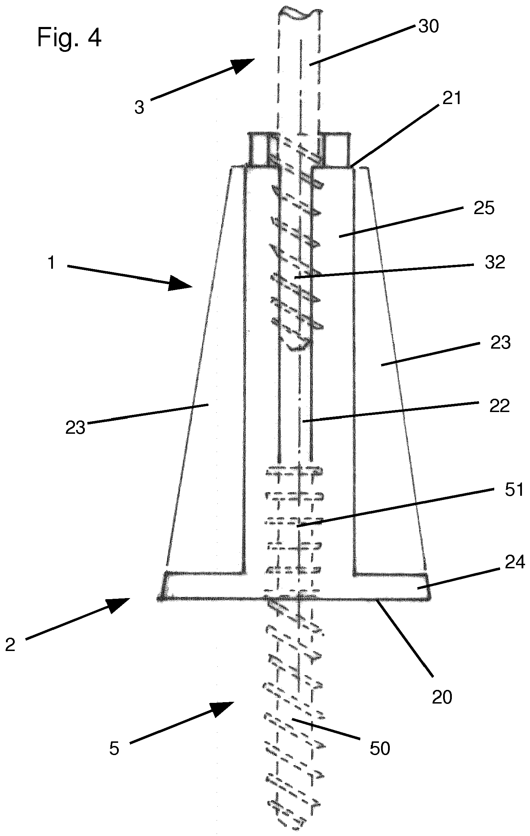

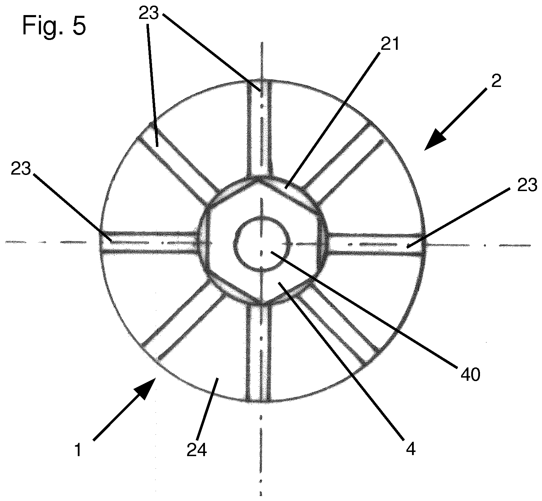

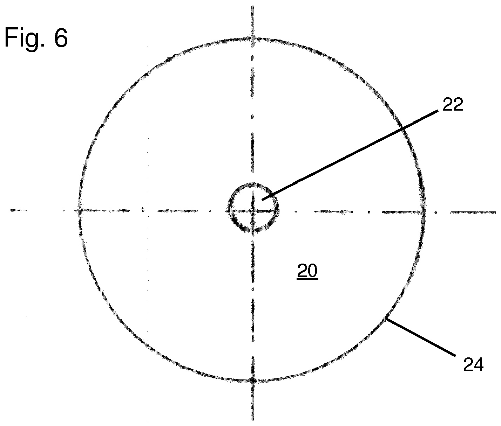

Unter Bezugnahme auf Fig. 4 bis 6 soll nachfolgend ein zweites Ausführungsbeispiel einer Gerüstverankerungsvorrichtung 1 näher erläutert werden, welches ebenfalls nicht Gegenstand der vorliegenden Erfindung ist. Die Gerüstverankerungsvorrichtung 1 weist auch in diesem Ausführungsbeispiel einen sich von der ersten ebenen und vorliegend kreisrund geformten Grenzfläche 20 zu einer zweiten Grenzfläche 21 sich verjüngenden Grundkörper 2 auf, der über seine gesamte Länge eine zylindrische Aufnahmeöffnung 22 aufweist, die wiederum eine Durchgangsöffnung zwischen der ersten und zweiten Grenzfläche 20, 21 des Grundkörpers 2 bildet. Der Grundkörper 2 ist auch in diesem Ausführungsbeispiel einstückig ausgebildet und besteht vorzugsweise aus einem - optional zusätzlich verstärkten (zum Beispiel glasfaserverstärkten) - Kunststoffmaterial. Im Gegensatz zum ersten Ausführungsbeispiel ist der Grundkörper 2 vorliegend nicht als kegelstumpfartiger Vollmaterialkörper ausgebildet, sondern weist in Umfangsrichtung eine Anzahl von Verstärkungsrippen 23 auf, die sich in Bezug auf einen die Aufnahmeöffnung 22 einschließenden mittleren Abschnitt 25 des Grundkörpers 2 in radialer Richtung erstrecken und in Umfangsrichtung des Grundkörpers 2 gleichmäßig verteilt sind und orthogonal zu einer scheibenförmigen Basis 24 orientiert sind. Die scheibenförmige beziehungsweise tellerartige Basis 24 weist die erste Grenzfläche 20 auf, welche die Anlagefläche mit der Wand 6 des Gebäudes bildet und für eine gleichmäßige Lastverteilung sorgt. Vorliegend sind insgesamt acht Verstärkungsrippen 23 vorgesehen, wobei benachbarte Verstärkungsrippen 23 jeweils einen Winkel von 45° miteinander einschließen. Somit sind die Verstärkungsrippen 23 in Umfangsrichtung des Grundkörpers 2 gleichmäßig verteilt (gleichmäßig winkelverteilt) angeordnet.

An der zweiten Grenzfläche 21 des Grundkörpers 2 ist auch in diesem Ausführungsbeispiel ein Außensechskant 4 mit einer zentralen Bohrung 40 angeordnet, in die die Ösenschraube 3 eingesetzt ist, die sich abschnittsweise durch die mit der Bohrung 40 fluchtende Aufnahmeöffnung 22 in das Innere des Grundkörpers 2 hinein erstreckt. In die Ringöse 31 der Ösenschraube 3 kann in der oben beschriebenen Weise ein Gerüsthaken 80 eines Teils des Gerüsts 8 eingesetzt werden, um diesen zu sichern.

Zur Montage an der Wand 6 eines Bauwerks weist die Gerüstverankerungsvorrichtung 1 im Bereich der ersten Grenzfläche 20 ebenfalls ein Gewindeelement 5 mit einem Gewindeabschnitt 50 und einem Halteabschnitt 51 auf, der eine von dem Gewindeabschnitt 50 abweichende Gestaltung aufweist und dafür sorgt, dass das Gewindeelement 5 im Inneren des Grundkörpers 2 in der zylindrischen Aufnahmeöffnung 22 festgelegt werden kann. Der Gewindeabschnitt 50 des Gewindeelements 5 ist in dem hier gezeigten Ausführungsbeispiel wiederum nach Art eines Holzgewindes ausgeführt, so dass der Grundkörper 2 bei der Montage mittels des Gewindeabschnitts 50, der in einen in die Wand 6 des Bauwerks eingebrachten Dübel 7 oder dergleichen eingreifen kann, befestigt werden kann.

Die Erstreckung des Grundkörpers 2 in Längsrichtung (Länge des Grundkörpers 2) ist in beiden vorstehend beschriebenen Ausführungsbeispielen abhängig von der Stärke der Dämmschicht 9, die zur Bildung einer wärmedämmenden Fassade an der Wand 6 des Bauwerks angebracht wird, damit der betreffende Teil des Gerüsts 8 sicher an der Wand 6 fixiert werden kann. Die Gerüstverankerungsvorrichtungen 1 werden somit mit unterschiedlichen Längen des Grundkörpers 2 vorgehalten und werden bei der Montage in Abhängigkeit von der Stärke der Dämmschicht 9 ausgewählt. Der Grundkörper 2 bildet somit ein Distanzstück, mittels dessen die Ringöse 31 der Ösenschraube 3 von der Wand 6 beabstandet werden kann.

Bei den vorstehend und weiter unten beschriebenen Gerüstverankerungsvorrichtungen 1 können der Gewindeabschnitt 50 des Gewindeelements 5 und der Gewindeabschnitt 32 der Ösenschraube 3 entgegengesetzte Drehrichtungen aufweisen. So kann der Gewindeabschnitt 50 des Gewindeelements 5 zum Beispiel in besonders vorteilhafter Weise als Linksgewinde ausgebildet sein, wohingegen der Gewindeabschnitt 32 der Ösenschraube 3 ein Rechtsgewinde ist. Die Ausbildung des Gewindeabschnitts 50 des Gewindeelements 5 als Linksgewinde verhindert in vorteilhafter Weise das Lösen des Grundkörpers 2 der Gerüstverankerungsvorrichtung 1 beim Herausdrehen der Ösenschraube 3.

Dadurch, dass der Grundkörper 2 der Gerüstverankerungsvorrichtung 1 ein einstückiges Kunststoffteil ist, kann er einfach und kostengünstig hergestellt werden. Darüber hinaus können in vorteilhafter Weise Wärmebrücken vermieden werden, die bei herkömmlichen Gerüstverankerungsvorrichtungen aus Metall entstehen können und die Wärmedämmeigenschaften der Fassadendämmung negativ beeinflussen können.

Da durch die Ausführung des Grundkörpers 2 aus Kunststoff keine Wärmebrücken gebildet werden, ist dieser somit für einen dauerhaften Verbleib an der Fassade des Bauwerks beziehungsweise im Wärmeverbundsystem mit der Dämmschicht 9 geeignet und kann bei Bedarf auch wiederverwendet werden. Während der Demontage des Gerüsts 8 wird die Ösenschraube 3 einfach aus der Aufnahmeöffnung 22 des Grundkörpers 2 herausgeschraubt. Um einen Schutz vor Witterungseinflüssen zu liefern, wird die Aufnahmeöffnung 22 von außen mittels eines geeigneten Verschlussmittels, insbesondere mittels eines Gewindeeinsatzes, Stopfens oder einer Verschlusskappe, verschlossen. Soll die Fassade erneut eingerüstet werden, so brauchen die Verschlussmittel (zum Beispiel die Gewindeeinsätze) lediglich von den Grundkörpern 2 entfernt zu werden. Dann kann in jeden der Grundkörper 2 wieder eine Ösenschraube 3 eingesetzt werden, um jeweils eine Gerüstverankerungsvorrichtung 1 im vorstehend erläuterten Sinne zu bilden.

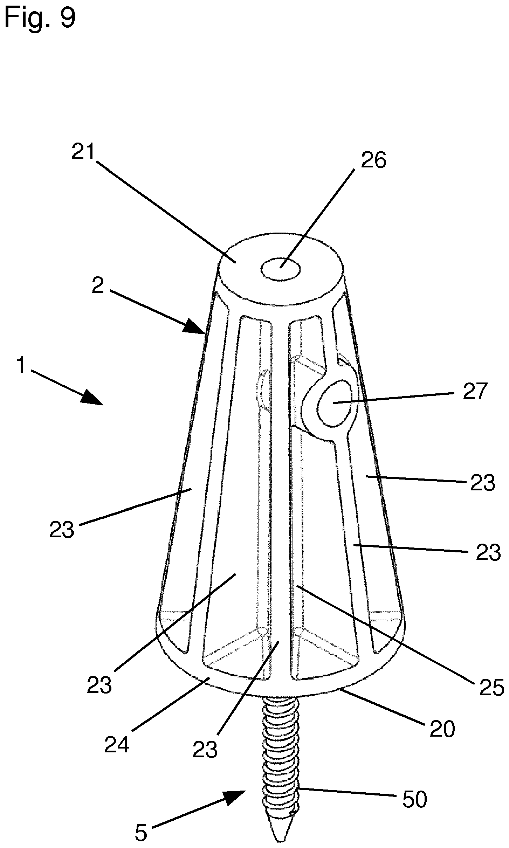

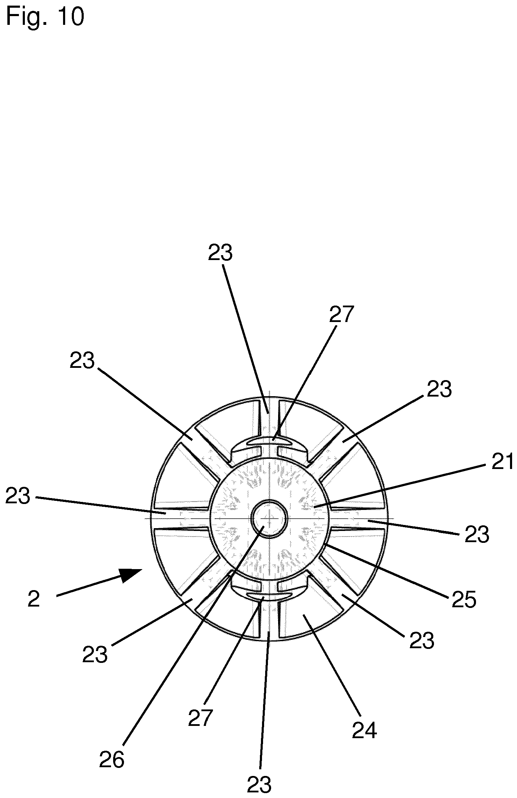

Unter Bezugnahme auf Fig. 9 bis 12 soll nachfolgend ein bevorzugtes Ausführungsbeispiel einer Gerüstverankerungsvorrichtung 1 näher erläutert werden. Die Gerüstverankerungsvorrichtung 1 weist in diesem Ausführungsbeispiel einen sich von der ersten und vorliegend kreisrund geformten Grenzfläche 20 zu einer zweiten Grenzfläche 21 verjüngenden Grundkörper 2 auf. Der Grundkörper 2 ist in diesem Ausführungsbeispiel einstückig ausgebildet und besteht aus einem - optional zusätzlich verstärkten (insbesondere glasfaserverstärkten) - Kunststoffmaterial. Der Grundkörper 2 weist in Umfangsrichtung acht Verstärkungsrippen 23 auf, die sich in Bezug auf den mittleren Abschnitt 25 des Grundkörpers 2 in radialer Richtung nach außen erstrecken. Benachbarte Verstärkungsrippen 23 schließen miteinander jeweils einen Winkel von 45° ein, so dass sie in Umfangsrichtung des Grundkörpers 2 gleichmäßig winkelverteilt sind. Ferner sind die Verstärkungsrippen 23 orthogonal zu der im Wesentlichen scheibenförmig ausgebildeten Basis 24 des Grundkörpers orientiert. Die scheibenförmige beziehungsweise tellerartige Basis 24 bildet die erste Grenzfläche 20, welche die Anlagefläche mit der Wand 6 des Gebäudes bildet und dabei für eine gleichmäßige und breite Lastverteilung sorgt. In dem hier gezeigten Ausführungsbeispiel weist die erste Grenzfläche 20, die der Wand 6 des Gebäudes bei der Montage zugewandt ist, eine Anzahl von Ausgleichvorsprüngen 200 auf, die von der ersten Grenzfläche 20 hervorstehen und rippenartig ausgebildet sind. Die Ausgleichvorsprünge 200, die grundsätzlich auch bei den beiden oben beschriebenen Ausführungsbeispielen der Gerüstverankerungsvorrichtung 1 vorgesehen sein können, dienen dem Zweck, gegebenenfalls vorhandene Unebenheiten im Wandverputz auszugleichen.

Zur Montage an der Wand 6 eines Bauwerks weist die Gerüstverankerungsvorrichtung 1 im Bereich der ersten Grenzfläche 20 ein Gewindeelement 5 mit einem Gewindeabschnitt 50 auf. Im Gegensatz zu den beiden oben beschriebenen Ausführungsbeispielen wird das Gewindeelement 5 mit einem Ende während der Herstellung des Grundkörpers 2 durch Spritzgießen in diesen eingespritzt und dadurch fest mit dem Grundkörper 2 verbunden. Der Gewindeabschnitt 50 des Gewindeelements 5 ist vorzugsweise als Linksgewinde ausgebildet und kann zum Beispiel als metrisches Gewinde oder nach Art eines Holzgewindes ausgeführt sein. Der Grundkörper 2 kann bei der Montage mittels des Gewindeabschnitts 50, der in einen in die Wand 6 des Bauwerks eingebrachten Dübel 7 oder dergleichen eingreifen kann, befestigt werden.

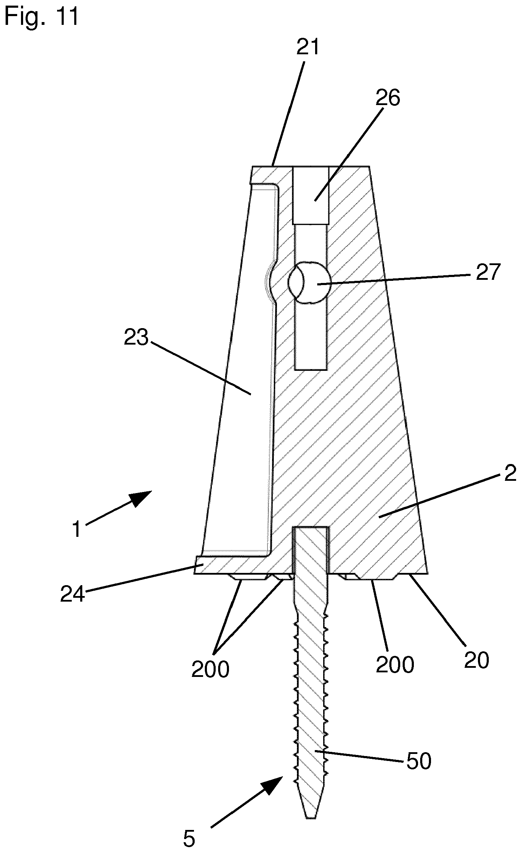

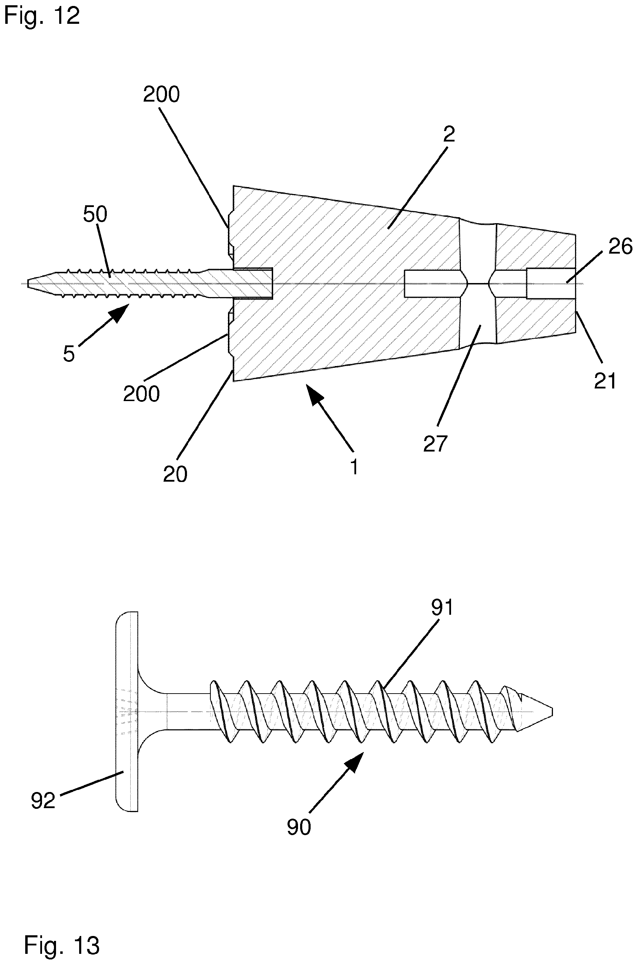

Im Gegensatz zu den beiden oben beschriebenen Ausführungsbeispielen weist der Grundkörper 2 vorliegend keine Aufnahmeöffnung 22 auf, die sich über die gesamte Länge zwischen der ersten Grenzfläche 20 und der zweiten Grenzfläche 21 erstreckt. Das Gewindeelement 5 ist - wie vorstehend erläutert - in den Grundkörper 2 eingespritzt und auf diese Weise fest mit diesem verbunden. Zur Aufnahme der Ösenschraube 3 weist der Grundkörper 2 eine hohlzylindrische Aufnahmeöffnung 26 auf, die sich ausgehend von der zweiten Grenzfläche 21 in axialer Richtung in das Innere des Grundkörpers 2 erstreckt. Die Länge der Aufnahmeöffnung 26 in axialer Richtung ist vorzugsweise an die Länge des Gewindeabschnitts 32 der Ösenschraube 3 angepasst. Dadurch wird in vorteilhafter Weise eine Begrenzung geschaffen, die ein zu tiefes Hereinschrauben der Ösenschraube 3 verhindern kann. Wie in Fig. 11 und 12 zu erkennen, ist eine oberer, an die zweite Grenzfläche 21 angrenzender Bereich der Aufnahmeöffnung 26 in axialer Richtung in einer Länge von etwa 2 cm ausgefräst, so dass in diesem Abschnitt der Durchmesser der Aufnahmeöffnung 26 geringfügig größer ist als im übrigen Bereich. Üblicherweise weisen die vorliegend bei den Gerüstverankerungsvorrichtungen 1 verwendeten Ösenschrauben 3 einen Gewindeabschnitt 32 mit einer Länge von etwa 7 cm auf, der vollständig in die (in Längsrichtung entsprechend dimensionierte) Aufnahmeöffnung 26 eingeschraubt wird. Dabei weist ein etwa 5 cm vom freien Ende beabstandeter Bereich des Gewindeabschnitts 32 typischerweise einen etwas größeren Durchmesser als der übrige Teil auf. Aus diesem Grund ist der Durchmesser der Aufnahmeöffnung 26 in dem an die zweite Grenzfläche 21 angrenzenden Bereich geringfügig größer ist als im übrigen Bereich. Die als Durchgangsöffnung ausgebildete Aufnahmeöffnung 22 gemäß den beiden ersten Ausführungsbeispielen kann in dem an die zweite Grenzfläche 21 angrenzenden Bereich ebenfalls in dieser Weise ausgeführt sein.

Orthogonal zu der Aufnahmeöffnung 26, die zur Aufnahme der Ösenschraube 3 vorgesehen ist, ist in dem hier gezeigten Ausführungsbeispiel eine Durchgangsöffnung 27 ausgebildet, die sich zwischen zwei um 180° gegenüberliegenden Bereichen der Außenfläche des Grundkörpers 2 durch diesen hindurch erstreckt und die Aufnahmeöffnung 26 schneidet. In diese Durchgangsöffnung 27 kann ein zumindest abschnittweise zylindrisch ausgebildetes Montagehilfswerkzeug (zum Beispiel ein Schraubendreher oder dergleichen) eingesetzt werden, welches einen Hebel bilden kann, so dass die Montage der Gerüstverankerungsvorrichtung 1 vereinfacht werden kann. Mittels des in die Durchgangsöffnung 27 eingesetzten Montagehilfswerkzeugs kann ein Nutzer auf einfache Weise ein Drehmoment ausüben, indem er eine Kraft über das Montagehilfswerkzeug senkrecht zur Längsachse des Grundkörpers 2 wirken lässt, um den Gewindeabschnitt 50 in den wandseitig vorgesehenen Dübel 7 einzuschrauben. Nach der Montage kann in die Ringöse 31 der Ösenschraube 3 in der bereits beschriebenen Weise ein Gerüsthaken 80 eines Teils des Gerüsts 8 eingesetzt werden, um diesen zu sichern.

Um nach dem Gebrauch der Gerüstverankerungsvorrichtung 1 die Aufnahmeöffnung 22, 26 des Grundkörpers 2 an der zweiten Grenzfläche 21 verschließen zu können, kann ein Verschlussmittel 90 verwendet werden, wie es beispielhaft in Fig. 13 dargestellt ist. Das Verschlussmittel 90 weist einen Gewindeabschnitt 91 und einen Kopfabschnitt 92 auf, wobei der Außendurchmesser des Kopfabschnitts 92 größer ist als der Außendurchmesser der Aufnahmeöffnung 22, 26 des Grundkörpers 2. Das Verschlussmittel 90 ist vorzugsweise aus einem gegenüber dem Einfluss ultravioletter Strahlung (UV-Strahlung) beständigen Kunststoff hergestellt, so dass es problemlos auch über längere Zeiträume der natürlichen Sonnenstrahlung ausgesetzt werden kann. Das Verschlussmittel 90 kann auf einfache Weise in die Aufnahmeöffnung 22, 26 des Grundkörpers 2 eingeschraubt werden, wenn die Gerüstverankerungsvorrichtung 1 nicht mehr benötigt wird, aber dennoch an der Fassade verbleibt. Wenn das Gebäude erneut eingerüstet werden soll, müssen lediglich die Verschlussmittel 90 wieder aus den Aufnahmeöffnungen 22, 26 der Grundkörper 2 der Gerüstverankerungsvorrichtungen 1 entfernt werden. Die Gerüstverankerungsvorrichtungen 1 stehen dann wieder für den bestimmungsgemäßen Gebrauch zur Verfügung.

Die hier vorgestellten Gerüstverankerungsvorrichtungen 1 können Zuglasten, die größer als 20 kN sind, und Querlasten die größer als 2,5 kN sein können, beschädigungsfrei standhalten.

## Patentansprüche

1. Gerüstverankerungsvorrichtung (1) zum Verankern eines Teils eines Gerüsts (8) an einem Bauwerk, umfassend einen einstückigen, sich zumindest abschnittsweise von einer ersten Grenzfläche (20) zu einer der ersten Grenzfläche (20) gegenüberliegenden zweiten Grenzfläche (21) hin verjüngenden Grundkörper (2), wobei die erste Grenzfläche (20) eine Anlagefläche für die Anlage des Grundkörpers (2) an einer Wand (6) des Bauwerks bildet, sowie ein erstes Anschlussmittel, das mit dem Grundkörper (2) verbunden ist, zum Anschluss des Grundkörpers (2) an die Wand (6) des Bauwerks und ein zweites Anschlussmittel zum Anschluss des Teils des Gerüsts (8) an den Grundkörper (2), wobei das erste Anschlussmittel ein Gewindeelement (5) mit einem Gewindeabschnitt (50) umfasst, der in ein bauwerksseitig vorgesehenes Aufnahmemittel, insbesondere einen Dübel (7) oder dergleichen, einschraubbar ist, **dadurch gekennzeichnet, dass** der Grundkörper (2) aus einem Kunststoff, insbesondere aus einem verstärkten Kunststoff, hergestellt ist und dass das Gewindeelement (5) abschnittsweise in den Grundkörper (2) eingespritzt ist.

2. Gerüstverankerungsvorrichtung (1) nach Anspruch 1, **dadurch gekennzeichnet, dass** der Grundkörper (2) als kegelstumpfartiger Vollmaterialkörper ausgebildet ist.

3. Gerüstverankerungsvorrichtung (1) nach Anspruch 1, **dadurch gekennzeichnet, dass** der Grundkörper (2) in Umfangsrichtung eine Anzahl von Verstärkungsrippen (23) aufweist, die sich in Bezug auf einen mittleren, die Längsachse definierenden Abschnitt (25) des Grundkörpers (2) in radialer Richtung erstrecken, wobei die Verstärkungsrippen (23) vorzugsweise in Umfangsrichtung des Grundkörpers (2) gleichmäßig winkelverteilt angeordnet sind.

4. Gerüstverankerungsvorrichtung (1) nach Anspruch 3, **dadurch gekennzeichnet, dass** der Grundkörper (2) eine Basis (24) aufweist, die die erste Grenzfläche (20) umfasst und die vorzugsweise im Wesentlichen scheibenförmig ausgebildet ist.

5. Gerüstverankerungsvorrichtung (1) nach Anspruch 4, **dadurch gekennzeichnet, dass** die Verstärkungsrippen (23) orthogonal zu der Basis (24) orientiert sind.

6. Gerüstverankerungsvorrichtung (1) nach Anspruch 4 oder 5, **dadurch gekennzeichnet, dass** die erste Grenzfläche (20) eine Anzahl von dieser hervorstehender, vorzugsweise rippenartig ausgebildeter Ausgleichvorsprünge (200) umfasst.

7. Gerüstverankerungsvorrichtung (1) nach einem der Ansprüche 1 bis 6, **dadurch gekennzeichnet, dass** der Gewindeabschnitt (50) als Linksgewinde, insbesondere nach Art eines Holzgewindes oder als metrisches Gewinde, ausgebildet ist.

8. Gerüstverankerungsvorrichtung (1) nach einem der Ansprüche 1 bis 7, **dadurch gekennzeichnet, dass** das zweite Anschlussmittel als Ösenschraube (3) ausgebildet ist, deren Gewindeabschnitt (32) in eine sich zumindest abschnittsweise in das Innere des Grundkörpers (2) erstreckende Aufnahmeöffnung (22, 26) eingeschraubt ist und die eine Ringöse (31) umfasst, in die ein hakenförmiges Befestigungsmittel für das Gerüst (8), insbesondere ein Gerüsthaken (80), einsetzbar ist.

9. Gerüstverankerungsvorrichtung (1) nach Anspruch 8, **dadurch gekennzeichnet, dass** die Aufnahmeöffnung (22, 26) als Durchgangsöffnung ausgebildet ist, die sich über die gesamte Länge des Grundkörpers (2) zwischen den beiden Grenzflächen (20, 21) erstreckt und in der das Gewindeelement (5) und die Ösenschraube (3) aufgenommen sind.

10. Gerüstverankerungsvorrichtung (1) nach Anspruch 8 oder 9, **dadurch gekennzeichnet, dass** der Gewindeabschnitt (32) der Ösenschraube (3) und der Gewindeabschnitt (50) des Gewindeelements (5) unterschiedliche Drehrichtungen aufweisen.

11. Gerüstverankerungsvorrichtung (1) nach einem der Ansprüche 8 bis 10, **dadurch gekennzeichnet, dass** an der zweiten Grenzfläche (21) ein Außensechskant (4) mit einer Bohrung (40) angeordnet ist, die mit der Aufnahmeöffnung (22, 26) des Grundkörpers (2) fluchtet.

12. Gerüstverankerungsvorrichtung (1) nach einem der Ansprüche 1 bis 11, **dadurch gekennzeichnet, dass** der Grundkörper (2) eine vorzugsweise zylindrisch geformte Durchgangsöffnung (27) aufweist, die sich orthogonal zur Längsachse des Grundkörpers (2) durch diesen hindurch erstreckt und in die bei der Montage ein Montagehilfswerkzeug einsetzbar ist.

13. Gerüstverankerungsvorrichtung (1) nach einem der Ansprüche 1 bis 12, **gekennzeichnet durch** ein Verschlussmittel (90), das so ausgebildet ist, dass es in die Aufnahmeöffnung (22, 26) an der zweiten Grenzfläche (21) des Grundkörpers (2) lösbar einsetzbar ist zum selektiven Verschließen und Freigeben der Aufnahmeöffnung (22, 26).

## Claims

1. Scaffolding anchoring device (1) for anchoring a part of a scaffolding (8) on a construction, comprising a single-piece base body (2) tapering at least sectionally from a first boundary surface (20) to a second boundary surface (21) opposite to the first boundary surface (20), wherein the first boundary surface (20) forms an abutment surface for the abutment of the base body (2) on a wall (6) of the construction, and a first connecting means, which is connected with the base body (2) for the connection of the base body (2) to the wall (6) of the construction, and a second connecting means for the connection of the part of the scaffolding (8) to the base body (2), wherein the first connecting means comprises a threaded element (5) having a threaded portion (50), which can be screwed into a reception means provided on the construction-side, in particular a plug (7) or similar, **characterised in that** the base body (2) is manufactured from a plastic, in particular from a reinforced plastic, and that the threaded element (5) is sectionally injection-moulded into the base body (2).

2. Scaffolding anchoring device (1) according to claim 1, **characterised in that** the base body (2) is formed as a frustoconical solid body.

3. Scaffolding anchoring device (1) according to claim 1, **characterised in that** the base body (2) has in circumferential direction a number of reinforcing ribs (23), which extend in relation to a central portion (25), defining the longitudinal axis, of the base body (2) in radial direction, wherein the reinforcing ribs (23) are preferably disposed evenly angularly distributed in circumferential direction of the base body (2).

4. Scaffolding anchoring device (1) according to claim 3, **characterised in that** the base body (2) has a base (24) which comprises the first boundary surface (20) and which is preferably formed substantially disc-shaped.

5. Scaffolding anchoring device (1) according to claim 4, **characterised in that** the reinforcing ribs (23) are oriented orthogonally to the base (24).

6. Scaffolding anchoring device (1) according to claim 4 or 5, **characterised in that** the first boundary surface (20) comprises a number of these protruding levelling projections (200) which are preferably formed rib-shaped.

7. Scaffolding anchoring device (1) according to any of claims 1 to 6, **characterised in that** the threaded section (50) is formed as a left-hand thread, in particular in the manner of a woodscrew thread or as a metric thread.

8. Scaffolding anchoring device (1) according to any of claims 1 to 7, **characterised in that** the second connection means is in the form of an eyebolt (3), the threaded section (32) of which is screwed into a reception opening (22, 26) extending at least sectionally into the interior of the base body (2) and which comprises an annular lug (31) into which a hook-shaped fastening means for the scaffolding (8), in particular a scaffolding hook (80), can be inserted.

9. Scaffolding anchoring device (1) according to claim 8, **characterised in that** the reception opening (22, 26) is in the form of a through-opening which extends over the entire length of the base body (2) between the two boundary surfaces (20, 21) and in which the threaded element (5) and the eyebolt (3) are accommodated.

10. Scaffolding anchoring device (1) according to claim 8 or 9, **characterised in that** the threaded portion (32) of the eyebolt (3) and the threaded portion (50) of the threaded element (5) have different directions of turn.

11. Scaffolding anchoring device (1) according to any of claims 8 to 10, **characterised in that** at the second boundary surface (21) is disposed an external hexagon (4) having a bore (40), which is flush with the reception opening (22, 26) of the base body (2).

12. Scaffolding anchoring device (1) according to any of claims 1 to 11, **characterised in that** the base body (2) has a preferably cylindrically formed through-opening (27) which extends orthogonally to the longitudinal axis of the base body (2) through the latter and into which an assembly tool can be inserted at the assembly.

13. Scaffolding anchoring device (1) according to any of claims 1 to 12, **characterised by** a closing means (90) which is formed such that it is releasably insertable in the reception opening (22, 26) at the second boundary surface (21) of the base body (2) for the selective closing and releasing of the reception opening (22, 26).

## Revendications

1. Dispositif d'ancrage d'échafaudage (1) pour l'ancrage d'une partie d'un échafaudage (8) sur un édifice, comprenant un corps de base (2) d'un seul tenant, se rétrécissant au moins par section d'une première surface limite (20) à une seconde surface limite (21) opposée à la première surface limite (20), dans lequel la première surface limite (20) forme une surface d'appui pour l'appui du corps de base (2) contre une paroi (6) de l'édifice, ainsi qu'un premier moyen de raccordement qui est lié au corps de base (2), pour le raccordement du corps de base (2) à la paroi (6) de l'édifice et un second moyen de raccordement pour le raccordement de la partie de l'échafaudage (8) au corps de base (2), dans lequel le premier moyen de raccordement comprend un élément fileté (5) avec une section filetée (50) qui est vissable dans un moyen de réception prévu côté édifice, en particulier une cheville (7) ou analogues, **caractérisé en ce que** le corps de base (2) est fabriqué en une matière plastique, en particulier en une matière plastique renforcée, et que l'élément fileté (5) est injecté par section dans le corps de base (2).

2. Dispositif d'ancrage d'échafaudage (1) selon la revendication 1, **caractérisé en ce que** le corps de base (2) est réalisé en tant que corps de matériau plein tronconique.

3. Dispositif d'ancrage d'échafaudage (1) selon la revendication 1, **caractérisé en ce que** le corps de base (2) présente dans le sens périphérique un nombre de nervures de renforcement (23) qui s'étendent dans le sens radial par rapport à une section (25) médiane définissant l'axe longitudinal du corps de base (2), dans lequel les nervures de renforcement (23) sont agencées de préférence dans le sens périphérique du corps de base (2) réparties de manière angulaire uniformément.

4. Dispositif d'ancrage d'échafaudage (1) selon la revendication 3, **caractérisé en ce que** le corps de base (2) présente une base (24) qui comprend la première surface limite (20) et qui est de préférence réalisée sensiblement en forme de disque.

5. Dispositif d'ancrage d'échafaudage (1) selon la revendication 4, **caractérisé en ce que** les nervures de renforcement (23) sont orientées orthogonalement à la base (24).

6. Dispositif d'ancrage d'échafaudage (1) selon la revendication 4 ou 5, **caractérisé en ce que** la première surface limite (20) comprend un nombre de ces saillies de compensation (200) réalisées de préférence comme des nervures, dépassant de celle-ci.

7. Dispositif d'ancrage d'échafaudage (1) selon l'une quelconque des revendications 1 à 6, **caractérisé en ce que** la section filetée (50) est réalisée en tant que filet gauche, en particulier comme un filetage de bois ou en tant que filetage métrique.

8. Dispositif d'ancrage d'échafaudage (1) selon l'une quelconque des revendications 1 à 7, **caractérisé en ce que** le second moyen de raccordement est réalisé en tant que vis à oeil (3) dont la section filetée (32) est vissée dans une ouverture de réception (22, 26) s'étendant au moins par section à l'intérieur du corps de base (2) et qui comprend un oeil annulaire (31) dans lequel un moyen de fixation en forme de crochet peut être inséré pour l'échafaudage (8), en particulier un crochet d'échafaudage (80).

9. Dispositif d'ancrage d'échafaudage (1) selon la revendication 8, **caractérisé en ce que** l'ouverture de réception (22, 26) est réalisée en tant qu'ouverture débouchante qui s'étend sur la longueur entière du corps de base (2) entre les deux surfaces limites (20, 21) et dans laquelle l'élément fileté (5) et la vis à oeil (3) sont reçus.

10. Dispositif d'ancrage d'échafaudage (1) selon la revendication 8 ou 9, **caractérisé en ce que** la section filetée (32) de la vis à oeil (3) et la section filetée (50) de l'élément fileté (5) présentent différents sens de rotation.

11. Dispositif d'ancrage d'échafaudage (1) selon l'une quelconque des revendications 8 à 10, **caractérisé en ce que** sur la seconde surface limite (21) un six pans extérieur (4) est agencé avec un perçage (40) qui s'aligne sur l'ouverture de réception (22, 26) du corps de base (2).

12. Dispositif d'ancrage d'échafaudage (1) selon l'une quelconque des revendications 1 à 11, **caractérisé en ce que** le corps de base (2) présente une ouverture débouchante (27) formée de préférence de manière cylindrique qui s'étend de manière orthogonale à l'axe longitudinal du corps de base (2) au travers de celui-ci et dans laquelle un outil d'aide au montage peut être inséré lors du montage.

13. Dispositif d'ancrage d'échafaudage (1) selon l'une quelconque des revendications 1 à 12, **caractérisé par** un moyen de fermeture (90) qui est réalisé de sorte qu'il puisse être inséré de manière détachable dans l'ouverture de réception (22, 26) sur la seconde surface limite (21) du corps de base (2) pour la fermeture et la libération sélectives de l'ouverture de réception (22, 26).
